# EUROPEAN PATENT SPECIFICATION

(11) **EP 1 895 379 B1**
(45) Date of publication and mention of the grant of the patent: **23.06.2010**
(21) Application number: 06254599.1
(22) Date of filing: 04.09.2006
(51) Int. Cl.: G05D 23/19

(54) **Improved control panel**
Verbessertes Bedienfeld
Panneau de contrôle amélioré

(43) Date of publication of application: 05.03.2008
(73) Proprietor: Honeywell Technologies Sarl, 1024 Ecublens (CH)
(72) Inventor: Agema, Eugene, 1444 VS Purmerend NH (NL)
(74) Representative: Ford, James

(56) References cited:
- WO-A-00/47934
- US-A- 5 538 181
- US-A- 005 761 083
- US-A1- 2003 067 889
- US-A1- 2004 095 237
- US-A1- 2004 263 349
- US-A1- 2005 096 753

## Description

### Field of Invention

The present invention relates to a controller, in particular, a controller for temperature control systems such as heating and/or cooling systems.

### Background to Invention

Traditionally, appliances such as temperature control systems, heating systems, cooling systems, boilers, and integrated heating, ventilation and air-conditioning (HVAC) systems use "on-off" thermostatic control. This involves monitoring temperature and turning a heating and/or cooling appliance on or off in order to try to maintain a temperature close to a set point temperature. Because of the simple nature of these systems, a relatively simple thermostatic controller can be used.

Modulating appliances are also available. These are more sophisticated than on-off appliances and are able to operate at a range of intensities. By reducing the power of the appliance as the temperature approaches the set point, modulating appliances can achieve the desired temperature more rapidly. Other advantages of such appliances are that they suffer less from temperature variation and are more energy efficient. However, modulating appliances generally require a more sophisticated control mechanism than on/off appliances, as they have to handle a wider range of data and signals.

Most appliances have a thermostatic controller for setting, measuring and controlling the temperature. Typically, the control settings, such as desired temperature, are user input. Thermostatic controllers are often made and sold separately from the temperature control appliance. To ensure compatibility of components in these systems, the control mechanism is sometimes standardised by protocol, for example, for modulating appliances the OpenTherm protocol is often used. This specifies the way in which information is exchanged between the controller and the appliance. As is well known, different appliances use different protocols. This means that different thermostatic controllers are needed for use with different appliances.

Because of the wide range of different appliances that are currently available, and the number of different protocols, selection and installation of the appropriate thermostatic controller for use with a given one of these appliances can be problematic.

Controllers that are operable with different devices are known in the art. US2003/067889 describes a computerized system for monitoring and controlling remote devices. The system includes an application server that receives a transmitter identification, which is used to access a look-up table in order to identify the location, the system, and parameters assigned to that transceiver.

US5538181 describes a control unit having a wide-angle motion detector for sensing room occupancy and thereby allow the control unit to control power to an appliance by removing power supply to the appliance when the room is unoccupied.

US2005/096753 and US2004/263349 describe home control systems in which data or command codes are entered into a control device to determine an appliance type.

WO00/47934 describes a controller that is programmable to permit universal control of existing systems of various types, where the programming involves setting of control switches. The system works with already installed HVAC systems by switching on or off the electrical input for the HVAC system or the energy output system.

US 5761083 describes a controller wherein a series of switches 40 are set to indicate the particular type of heating/cooling unit being used with the controller.

US2004/095237 teaches of a system wherein a device is operated according to instructions provided by a central server.

### Summary of Invention

According to a first aspect of the present invention, there is provided a controller for controlling at least two types of heating and/or cooling appliance, as described in claim 1. The controller is operable to sense or detect which type of heating and/or cooling appliance it is connected to and select a control mode appropriate for the detected appliance.

By automatically sensing the type of appliance it is connected to, the controller of the present invention can be used with multiple types of appliances, thereby simplifying installation.

The appliance may be a central heating system and/or an air conditioning system and/or a heating, ventilation and air conditioning (HVAC) systems and/or a boiler.

One of appliances may be an on/off system. One of the appliances may be a modulating system, preferably a modulating system operated using an OpenTherm protocol. One of the appliances may operate as a power stealing on/off system.

The means of detecting may be adapted to measure a signal from at least one type of appliance. The means of detecting may be adapted to select an appliance type depending on whether the measured signal is above and/or below and/or between at least one threshold value. The means for detecting may be a current measuring means. The threshold may be between 10 and 15mA, preferably 12.5mA.

The means of detecting may be adapted to compare a signal from at least one type of control system with an expected signal indicative of a type of control system. The means for measuring a signal may measure a signal on an OpenTherm Rx line. The means for detecting may be adapted to perform two separate detection processes.

### Brief Description of Drawings

Various embodiments of the invention will now be described by way of example only and with reference to the accompanying drawings, of which:
Figure 1 is a schematic diagram of a boiler system and a controller;
Figure 2 is a schematic diagram of the controller of Figure 1, and
Figure 3 is a flow diagram of the operation of the controller of Figure 2.

### Detailed Description of Drawings

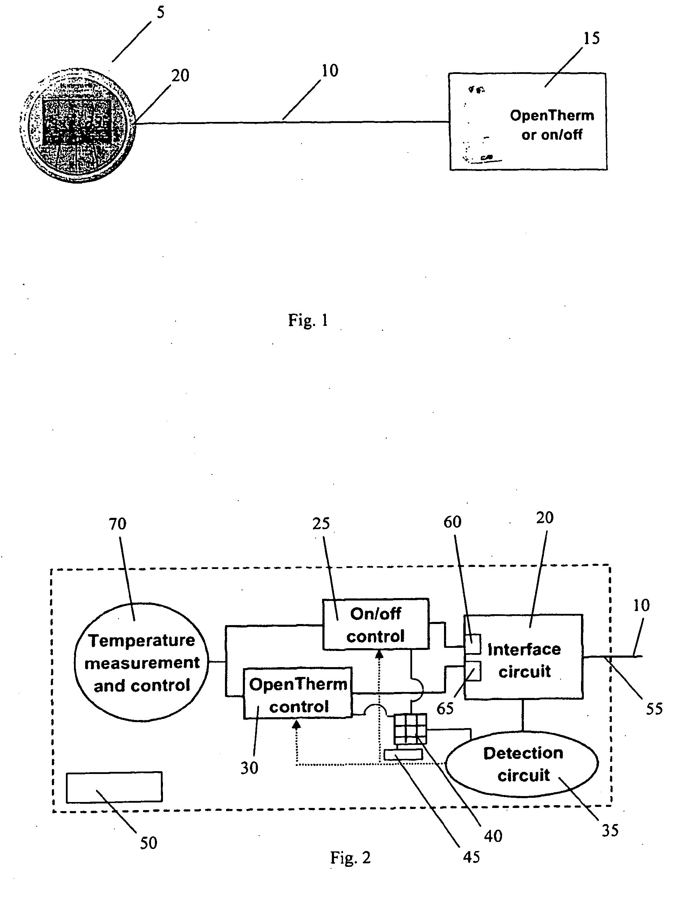

Figure 1 shows a controller 5 that has a display and user input and is attached by a polarity free 2-wire low voltage connection 10 to an appliance 15. It will be understood by a person skilled in the art that the appliance may be any appliance capable of heating and/or cooling such as a central heating system, cooling system, temperature control system, boiler, and/or an integrated heating, ventilation and air-conditioning (HVAC) system. The connection 10 provides a communications link between the controller 5 and the appliance 15. Optionally, the connection 10 also provides power to the controller 5 from the appliance 15. The appliance 15 may be an on/off appliance or an OpenTherm appliance. In accordance with the invention, the controller 5 is operable to sense or detect the type of appliance to which it is connected and automatically select an appropriate operating mode. This greatly simplifies the installation process.

Figure 2 shows the controller 5 in more detail. This has an interface 20 that is connected to each of the external connection 10, an on/off control system 25 adapted to control an on/off type appliance, an OpenTherm control system 30 adapted to control an QpenTherm type appliance and a detection circuit 35 for detecting the type of appliance 15 that is connected to the controller 5. Additionally, the controller 5 is provided with a processor 40 and a memory 45 for storing settings, such as the set-point temperature, and data. The controller optionally has a backup power supply, such as a battery or a supercapacitor, 50 for use in a non-power-stealing mode or to provide back-up power.

The control systems 25, 30 may be separate or integrated within the same circuit. When the controller is installed, the appropriate one of the control systems 25, 30 is selected in response to a signal sensed by the detection circuit 35 via the connection 10. For the OpenTherm appliance, the detection circuit 35 is operable to monitor the OpenTherm Rx communications line 55. By measuring the current carried on the line 55 and determining whether or not it is higher than a threshold value, typically 12.5mA, the detection circuit 35 can determine if an OpenTherm system is connected. The detection circuit 35 is further adapted to provide a second detection step by monitoring communications received from the appliance 15. Since on/off and OpenTherm systems use different communication protocols, monitoring communications allows the type of appliance to be identified. Once the detection circuit 35 has identified the type of appliance, a control signal is sent to the interface 20 to cause the appropriate one of the on/off control 25 and OpenTherm control 30 to be selected. This is done via interface switches 60 and 65, which can be opened in a mutually exclusive fashion to connect the OpenTherm control circuit 30 or the on/off control circuit 25 respectively to the appliance 15.

The selected control system 25 or 30 controls the appliance 15 to achieve a room temperature according to a set-point temperature. The room temperature is measured by a temperature measurement system 70, which is arranged to provide temperature data to the control system 25, 30. Temperature measurement systems 70 and their use in controllers are well known in the art. When connected by the respective interface switches 60, 65, the on/off control system 25 and the OpenTherm control system 30 function in much the same way as a conventional controller having only an on/off control system or an OpenTherm control system respectively, the operation of which would be understood by a person skilled in the art.

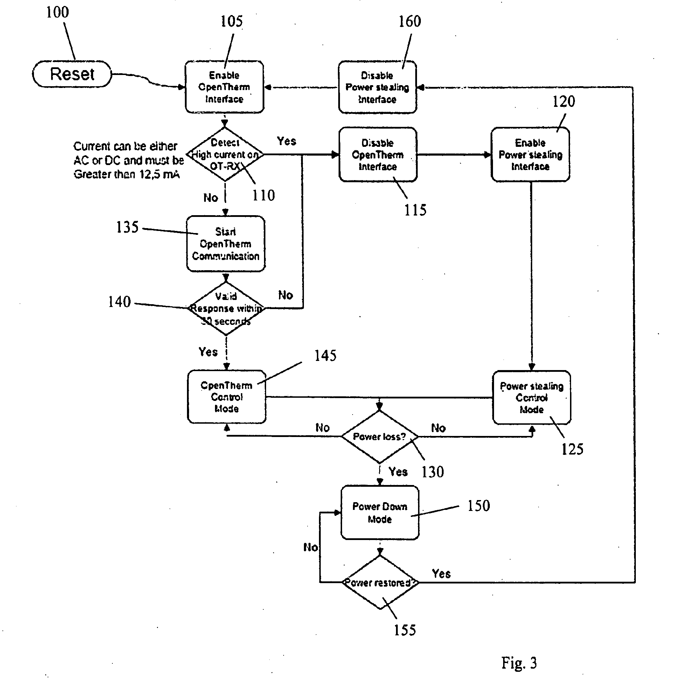

Figure 3 shows the steps that are taken when the controller 5 is connected to an appliance. Initially, the controller 5 operates in OpenTherm mode. As such, upon starting or resetting 100, the controller 5 is arranged to activate 105 the OpenTherm control circuit 30. The detection circuit 35 is then operable to measure 110 the current on the connection 10 to the appliance as received by the controller 5 at the interface 20. For OpenTherm appliances, the connection 10 is between the controller 5 and the OpenTherm Rx line 55. If the signal measured is greater than the threshold value, e.g. 12.5mA, then the detection circuit 35 is adapted to disable 115 the OpenTherm control circuit 30 by relaying an appropriate control signal to the OpenTherm switching circuit 65. The detection circuit 35 further enables 120 the on/off control circuit 25 by sending an appropriate control signal to the on/off switching circuit 60. The on/off control system 25 then sends control signals to control 125 the appliance 15 as described previously. The system remains in on/off mode until power is cut-off 130 from the controller 5.

If the signal measured on the OpenTherm Rx line 55 is less than the threshold value, then the OpenTherm control circuit 30 sends OpenTherm signals to control the appliance 15 as described previously, Once OpenTherm operation is initiated 135, the detection system 35 monitors 140 the communications received by the interface circuit 40 from the appliance 15. If the communications received do not include a valid response to control signals sent by the OpenTherm control circuit 30 under the OpenTherm protocol within a set time period, for example 30 seconds, the system 5 switches to on/off control as described above 115-130. If a valid response under the OpenTherm protocol within the time limit is received, then the system remains 145 in OpenTherm mode until power is cut-off 130 from the controller 5.

When power is cut-off 130, the controller 5 is adapted to run 150 from the backup power. The backup power, supplied from the backup power supply 50, is adapted to maintain full functionality with the exception of non-essential, power hungry features such as display backlighting, for a limited time, for example thirty minutes. After this time, the controller 5 is adapted to enter into a power conservation mode wherein the user interface functions such as the display and inputs are disabled and only the system time is updated. Full functionality is reactivated when the system power is restored. Upon restoration 135 of the controller 5 power, the system resets by disabling 165 the on/off control circuit 25, re-enabling 105 the OpenTherm control circuit 30 and repeating the detection procedure 110-145 described above.

A skilled person will appreciate that variations of the disclosed arrangements are possible without departing from the invention. For example, whilst examples are given of operating using an on/off appliance 15 or an OpenTherm appliance 15, it will be appreciated that the appliance 15 and associated protocols may be any suitable appliance or protocol known in the art. In addition, while the above description relates to a controller 5 for a heating appliance 15, a person skilled in the art would understand that the controller may be modified to alternatively or additionally operate cooling systems, such as air conditioning and/or fan systems, and/or combined heating and cooling systems, such as HVAC systems.

## Claims

1. A thermostatic controller (5) for selectively controlling at least two types of heating and/or cooling appliances (15), **characterised in that** the controller (5) is operable to measure a current and/or voltage signal from an appliance (15) it is connected to and determine whether the measured signal is above and/or below at least one threshold and/or between two thresholds, to determine the type of heating and/or cooling appliance (25) and select a control mode appropriate for the detected type of appliance.

2. A controller (5) as claimed in claim 1, wherein at least one of the heating and/or cooling appliances (15) is operated using an OpenTherm protocol.

3. A controller (5) as claimed in any of the preceding claims that is operable to compare a received communications signal with an expected communications signal, thereby to identify the appliance (15).

4. A controller (5) as claimed in any of the preceding claims, wherein the appliances (15) are two or more of a central heating system and/or air conditioning system and/or heating, ventilation and air conditioning (HVAC) system and/or a boiler.

5. A controller (5) as claimed in any of the preceding claims, wherein at least one of the appliances (15) is an on/off system and/or a power stealing on/off system.

6. A controller (5) as claimed in any of claims 1 to 4, wherein at least one of the appliances (15) is a modulating system.

7. A controller (5) as claimed in any preceding claim, wherein the controller (5) comprises first control means (25) for controlling a first type of heating and/or cooling appliance (15); second control means (30) for controlling a second type of heating and/or cooling appliance (15); means (35) for measuring a current and/or voltage signal from an appliance (15) connected to the controller (5) and means for determining whether the measured signal is above and/or below at least one threshold and/or between two thresholds, and thereby selecting one of the first (25) or second (30) control means.

8. A controller (5) as claimed in any of the preceding claims, wherein the at least two types of appliances use different protocols of communication, and the current and/or voltage signal is a signal carried on a communication line between the controller and the appliance.

## Patentansprüche

1. Thermostatregler (5) zur gezielten Regelung von mindestens zwei Arten von Heiz- und/oder Kühleinrichtungen (15), **dadurch gekennzeichnet, dass** der Regler (5) dahingehend betrieben werden kann, ein Strom- und/oder Spannungssignal von einer Einrichtung (15), mit der er verbunden ist, zu messen und zu ermitteln, ob das gemessene Signal über und/oder unter mindestens einem Schwellwert und/oder zwischen zwei Schwellwerten liegt, um die Art der Heiz- und/oder Kühleinrichtung (25) zu ermitteln und einen für die erfasste Einrichtungsart angemessenen Regelmodus zu wählen.

2. Regler (5) nach Anspruch 1, wobei mindestens eine der Heiz- und/oder Kühleinrichtungen (15) unter Verwendung eines OpenTherm-Protokolls betrieben wird.

3. Regler (5) nach einem der vorhergehenden Ansprüche, der dahingehend betrieben werden kann, ein erhaltenes Kommunikationssignal mit einem erwarteten Kommunikationssignal zu vergleichen, um dadurch die Einrichtung (15) zu identifizieren.

4. Regler (5) nach einem der vorhergehenden Ansprüche, wobei die Einrichtungen (15) zwei oder mehr von einem Zentralheizungssystem und/oder einer Klimaanlage und/oder einem HVAC-System (HVAC - heating, ventilation and air conditioning) und/oder einem Kessel sind.

5. Regler (5) nach einem der vorhergehenden Ansprüche, wobei mindestens eine der Einrichtungen (15) ein Ein-/Aus-System und/oder ein leistungsraubendes Ein-/Aus-System ist.

6. Regler (5) nach einem der Ansprüche 1 bis 4, wobei mindestens eine der Einrichtungen (15) ein Modulationssystem ist.

7. Regler (5) nach einem vorhergehenden Anspruch, wobei der Regler (5) ein erstes Reglermittel (25) zur Regelung einer ersten Art von Heiz- und/oder Kühleinrichtung (15); ein zweites Reglermittel (30) zur Regelung einer zweiten Art von Heiz- und/oder Kühleinrichtung (15); ein Mittel (35) zur Messung eines Strom- und/oder Spannungssignals von einer mit dem Regler (5) verbundenen Einrichtung (15) und ein Mittel zur Ermittlung, ob das gemessene Signal über und/oder unter einem Schwellwert und/oder zwischen zwei Schwellwerten liegt, und dadurch Auswählen des ersten (25) oder zweiten (30) Reglermittels umfasst.

8. Regler (5) nach einem der vorhergehenden Ansprüche, wobei die mindestens zwei Arten von Einrichtungen verschiedene Kommunikationsprotokolle verwenden und das Strom- und/oder Spannungssignal ein Signal ist, das auf einer Kommunikationsleitung zwischen dem Regler und der Einrichtung übertragen wird.

## Revendications

1. Régulateur thermostatique (5) pour réguler sélectivement au moins deux types d'appareils de chauffage et/ou de refroidissement (15), **caractérisé en ce qu'**on peut utiliser ce régulateur (5) de façon à mesurer un signal de courant et/ou de tension venant d'un appareil (15) auquel il est connecté et à déterminer si le signal mesuré est au-dessus et/ou en dessous d'au moins un seuil et/ou entre deux seuils, afin de déterminer le type d'appareil de chauffage et/ou de refroidissement (25) et de sélectionner un mode de régulation approprié au type détecté d'appareil.

2. Régulateur (5) selon la revendication 1, dans lequel au moins un des appareils de chauffage et/ou de refroidissement (15) est actionné en utilisant un protocole OpenTherm.

3. Régulateur (5) selon l'une quelconque des revendications précédentes, qu'on peut utiliser de façon à comparer un signal de communication reçu avec un signal de communication attendu, afin d'identifier ainsi l'appareil (15).

4. Régulateur (5) selon l'une quelconque des revendications précédentes, dans lequel les appareils (15) sont deux appareils ou plus d'un système de chauffage central et/ou d'un système de climatisation et/ou d'un système de chauffage, de ventilation et de climatisation (CVC) et/ou d'une chaudière.

5. Régulateur (5) selon l'une quelconque des revendications précédentes, dans lequel au moins un des appareils (15) est un système tout ou rien et/ou un système tout ou rien de détournement d'alimentation.

6. Régulateur (5) selon l'une quelconque des revendications 1 à 4, dans lequel au moins un des appareils (15) est un système modulateur.

7. Régulateur (5) selon l'une quelconque des revendications précédentes, ce régulateur (5) comprenant un premier moyen de commande (25) pour commander un premier type d'appareil de chauffage et/ou de refroidissement (15) ; un deuxième moyen de commande (30) pour commander un deuxième type d'appareil de chauffage et/ou de refroidissement (15) ; un moyen (35) pour mesurer un signal de courant et/ou de tension venant d'un appareil (15) connecté au régulateur (5) et un moyen pour déterminer si le signal mesuré est au-dessus et/ou en dessous d'au moins un seuil et/ou entre deux seuils, et sélectionnant ainsi soit le premier (25), soit le deuxième (30) moyen de commande.

8. Régulateur (5) selon l'une quelconque des revendications précédentes, dans lequel au moins deux types d'appareils utilisent différents protocoles de communication, et le signal de courant et/ou de tension est un signal acheminé sur une ligne de communication entre le régulateur et l'appareil.
